# EUROPEAN PATENT SPECIFICATION

(11) **EP 2 265 044 B1**
(45) Date of publication and mention of the grant of the patent: **22.02.2017**
(21) Application number: 08739508.3
(22) Date of filing: 31.03.2008
(51) Int. Cl.: H04W 36/00, H04W 28/04

(54) **COMMUNICATION CONTROLLER, COMMUNICATION CONTROL METHOD, AND COMMUNICATION CONTROL PROGRAM**
KOMMUNIKATIONSSTEUERUNG, KOMMUNIKATIONSSTEUERVERFAHREN UND KOMMUNIKATIONSSTEUERPROGRAMM
DISPOSITIF DE COMMANDE DE COMMUNICATION, PROCÉDÉ DE COMMANDE DE COMMUNICATION ET PROGRAMME DE COMMANDE DE COMMUNICATION

(43) Date of publication of application: 22.12.2010
(73) Proprietor: Fujitsu Limited, Kawasaki-shi, Kanagawa 211-8588 (JP)
(72) Inventor: TAKATA, Tatsuhiko, Fukuoka-shi Fukuoka 814-8588 (JP); FUKUZAWA, Yohji, Fukuoka-shi Fukuoka 814-8588 (JP); SATOU, Akihiro, Fukuoka-shi Fukuoka 814-8588 (JP); KAGIMOTO, Tomonari, Fukuoka-shi Fukuoka 814-8588 (JP)
(74) Representative: Wilding, Frances Ward
(86) International application number: PCT/JP2008/056395
(87) International publication number: WO 2009/122523

(56) References cited:
- WO-A2-00/32001
- JP-A- 2002 291 015
- JP-A- 2005 348 154
- JP-A- 2006 157 528
- JP-A- 2007 135 030
- JP-A- 2007 195 046
- US-A1- 2006 073 828
- US-A1- 2006 215 592
- US-B1- 6 385 452

## Description

### TECHNICAL FIELD

The present invention relates to a communication control device, a communication control method, and a communication control program in a wireless communication control system including a communication control device that controls wireless communication of a mobile communication terminal and a management device that performs path control and data transmission/reception control between the communication control device and another communication control device by wire communication.

### BACKGROUND ART

US2006073828A1 relates to a controller of a communication system, the controller comprising: means for determining user terminal time delay between delivery and acknowledgement of a transmission; means for conveying the user terminal time delay; means for calculating switching time delay; and means for transferring user terminal data conveyance to the handover target network controller at a moment based on the switching time delay.

Conventionally, LTE (Long Term Evolution: super 3G) has been developed as a standard for high-speed mobile communication to make a step-by-step migration from the third generation (3G) mobile communication to the fourth generation (4G) mobile communication. Although the LTE is regarded as an evolution of IMT-2000, a wireless interface and a RAN (Radio Access Controller) architecture of the 3G system have been reexamined fundamentally to make a smooth migration to the 4G. As a result, with delay time compression and improvement in communication speed, the LTE achieves maximum data communication speed of 300 megabits per second for downloading, and of 50 megabits per second for uploading.

In the LTE, nodes of wireless access system are changed from the current 3G nodes. Specifically, RNC (Radio Network Controller) provided in a conventional 3G system to collectively manage a plurality of base stations is omitted, and simplified to a single node system in which only the base station performs distributed control, and hence most functions provided in the RNC are reallocated in the wireless base station.

In the LTE, different from the current 3G, only one link is established during communication. Therefore, when a move of a mobile object across a cell boundary (handover) occurs, it is necessary to disconnect the connection to the cell from which the mobile object moves and establish a connection to the cell to which the mobile object moves. Further, when a handover from a base station to another base station occurs, it is necessary to perform a switching operation of a path to upper level node (EPC) in addition to the above operation (Patent Document 1).

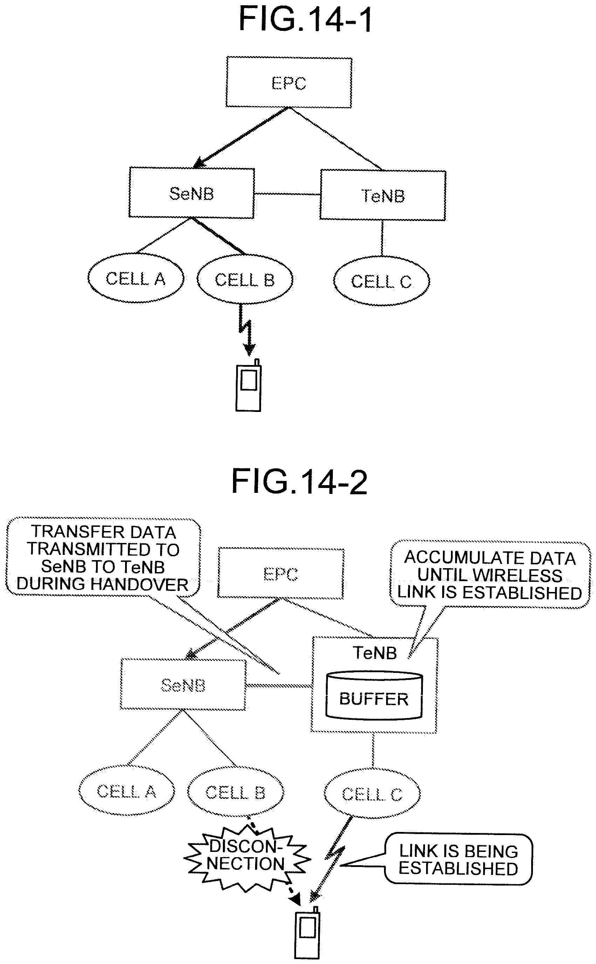

Here, an example in which a link is established when a mobile communication terminal moves across a cell boundary of a base station will be specifically described. As illustrated in FIG. 14-1, the communication system includes a wireless base station SeNB that holds a cell A and a cell B indicating a radio wave management range by wire communication, TeNB that holds a cell C by wire communication in the same way as the SeNB, EPC that performs communication control (control for transmission/reception of data, connection, and the like) between the EPC that holds the SeNB and the TeNB by wire communication and the base stations, and a mobile communication terminal that performs wireless communication by using the cell B.

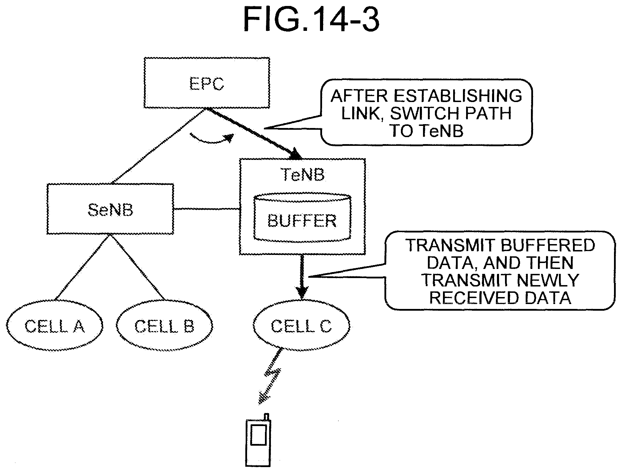

In such a configuration, as illustrated in FIG. 14-2, when the mobile communication terminal moves to an environment in which the mobile communication terminal uses the cell C, the mobile communication terminal transmits a handover request to the SeNB via the cell B which the mobile communication terminal uses from before the movement, and the SeNB that receives the handover request establishes a session with the TeNB that holds the cell C, and transfers data transmitted from the EPC to the mobile communication terminal to the TeNB. Thereafter, as illustrated in FIG. 14-3, when a connection between the cell C and the mobile communication terminal is established, the TeNB transmits data bound for the mobile communication terminal, which is received from the SeNB and accumulated, to the mobile communication terminal via the cell C, and the EPC switches the path from the SeNB to the TeNB. In summary, when a mobile communication terminal moves across a cell boundary of a wireless base station, the wireless route between the mobile communication terminal and a wireless base station is switched, and thereafter the wire route between the EPC and a wireless base station is switched.

Patent Document 1: Japanese Laid-open Patent Publication No. 2006-157528

### DISCLOSURE OF INVENTION

### PROBLEMS TO BE SOLVED BY THE INVENTION

However, in the conventional technique described above, there are a problem that network congestion occurs because a message between nodes for switching the path needs to be transmitted every time a handover occurs, and a problem that a processing load of management device increases because a path switching request is sent to the management device that performs data transmission/reception control between wireless base stations every time a handover occurs.

The problems will be described specifically by using the above described example. If the mobile communication terminal moves frequently between the SeNB and the TeNB, which are wireless base stations, before the mobile communication terminal establishes a connection with a cell held by the wireless base stations, data transmitted from the EPC (management device) to the mobile communication terminal is not transmitted to the mobile communication terminal and continues to be temporarily accumulated in each of the SeNB and the TeNB. As a result, in each of the SeNB and the TeNB, a delay in processing of data transmitted from mobile communication terminals other than the mobile communication terminal occurs, and thus a case in which connectivity in the entire network decreases occurs. In addition, every time a handover occurs, the EPC receives a handover request from the SeNB and the TeNB, and performs path switching processing, so that the processing load increases.

Further, when many mobile communication terminals perform a handover at the same time, the above problems occur more significantly, and in the LTE, an occurrence rate of handover between nodes (wireless base stations) (handover between RNCs, handover between wireless base stations in the LTE) increases as compared with current 3G, and thus the above problems appear prominently.

The present invention is made to solve the above problems, and it is an object of the present invention to provide a communication control device, a communication control method, and a communication control program which can prevent network congestion and reduce a processing load of management device that performs data transmission/reception control between wireless base stations even when handovers between communication control devices functioning as a wireless base station are performed.

### MEANS FOR SOLVING PROBLEM

To solve the problems, a communication control device that controls wireless communication of a mobile communication terminal in a wireless communication control system that includes the communication control device and a management device that performs path control and data transmission/reception control between the communication control device and another communication control device by wire communication, includes a wireless path switching unit that, when determining that a mobile communication terminal performing wireless communication using a first wireless path through another communication control device needs to perform handover from the another communication control device to the communication control device, switches the first wireless path to a second wireless path through the communication control device; and a wire path switching request transmission unit that, to the management device, transmits a request for switching a first wire path through the another communication control device performing data transmission/reception control for the mobile communication terminal to a second wire path through the communication control device when determining that no congestion occurs in the second wire path after a predetermined time elapses from when the first wireless path is switched to the second wireless path, and does not transmit the request for switching the first wire path to the second wire path when determining that congestion occurs in the second wire path after the predetermined time elapses from when the wireless path is switched to the second wireless path.

### EFFECT OF THE INVENTION

According to the present invention, when a device determines the need for switching a wireless path from a mobile communication terminal that performs wireless communication using the wireless path through another communication control device, the device switches the wireless path to a wireless path through the device, and only when determining that no congestion occurs in the wire path after a predetermined time elapses from when the wireless path is switched, the device transmits a request for switching a wire path through the other communication control device that performs data transmission/reception control for the mobile communication terminal to a wire path through the device to a management device, so that it is possible to prevent network congestion and reduce a processing load of the management device that performs data transmission/reception control between wireless base stations even when handovers between communication control devices that function as a wireless base station are performed.

### BRIEF DESCRIPTION OF THE DRAWINGS

FIG. 1 is a block diagram illustrating a configuration of a communication control system according a first embodiment.
FIG. 2 is a sequence diagram illustrating a processing flow of the communication control system according the first embodiment.
FIG. 3-1 is a diagram illustrating a first state in the sequence.
FIG. 3-2 is a diagram illustrating a second state in the sequence.
FIG. 3-3 is a diagram illustrating a third state in the sequence.
FIG. 4 is a flowchart illustrating a processing flow in a wireless base station A according the first embodiment.
FIG. 5 is a flowchart illustrating a processing flow in a wireless base station B according the first embodiment.
FIG. 6 is a flowchart illustrating a processing flow in EPC according the first embodiment.
FIG. 7 is a sequence diagram illustrating a processing flow in a communication control system according a second embodiment.
FIG. 8 is a diagram illustrating an example of information stored in EPC information DB.
FIG. 9 is a sequence diagram illustrating a processing flow in a communication control system according a third embodiment.
FIG. 10 is a diagram illustrating an example of information stored in mobile terminal information DB 330.
FIG. 11 is a sequence diagram illustrating a processing flow in a communication control system according a fourth embodiment.
FIG. 12 is a sequence diagram illustrating a processing flow in a communication control system according a fifth embodiment.
FIG. 13 is a diagram illustrating an example of a computer system that executes a communication control program.
FIG. 14-1 is a diagram for explaining a conventional technology.
FIG. 14-2 is a diagram for explaining the conventional technology.
FIG. 14-3 is a diagram for explaining the conventional technology.

### EXPLANATION OF LETTERS OR NUMERALS

200 EPC
300 Wireless base station A
301 Buffer memory
302 Control signal transmission/reception unit (for wire communication)
303 Call controller
304 Control signal transmission/reception unit (for wireless communication)
305 Data transmission/reception unit (for wire communication)
306 Data transmission/reception unit (for wireless communication)
307 Timer controller
308 Path switching determination unit
310 Mobile terminal information DB
320 Wireless base station B
321 Buffer memory
322 Control signal transmission/reception unit (for wire communication)
323 Call controller
324 Control signal transmission/reception unit (for wireless communication)
325 Data transmission/reception unit (for wire communication)
326 Data transmission/reception unit (for wireless communication)
327 Timer controller
328 Path switching determination unit
329 EPC information DB
330 Mobile terminal information DB
500 Mobile communication terminal
600 Computer system
601 RAM
602 HDD
603 ROM
603a Wireless path switching program
603b Wire path switching request transmission program
604 CPU
604a Wireless path switching process
604b Wire path switching request transmission process

### BEST MODES FOR CARRYING OUT THE INVENTION

Hereinafter, embodiments of a communication control device, a communication control method, and a communication control program according to the present invention will be described in detail with reference to the accompanying drawings. In the description below, an outline and characteristics of the communication control device according to the embodiments, and a configuration and a processing flow of the communication control device will be described sequentially, and finally various modified examples of the embodiments will be described.

### First Embodiment

### Outline and Characteristics of Communication Control Device (Wireless Base Station)

First, an outline and characteristics of the communication control device according to the first embodiment will be described. A communication control system including the communication control device according to the first embodiment includes a wireless base station A (corresponding to "other communication control device" recited in the claims) and a wireless base station B (corresponding to "communication control device" recited in the claims) which control wireless communication of a mobile communication terminal (corresponding to "mobile communication terminal" recited in the claims), and an EPC (corresponding to "management device" recited in the claims) which performs path control and data transmission/reception control between the wireless base station A and the wireless base station B by wire communication. Although, in this embodiment, an example using one EPC will be described, a plurality of EPCs may be connected in the embodiment.

The wireless base station A includes a cell A and a cell B which are divided areas in each of which radio waves are managed, and the wireless base station B includes a cell C in the same way as the wireless base station A. In this embodiment, a case in which a mobile communication terminal performing wireless communication via the cell B of the wireless base station A moves into an environment using the cell C of the wireless base station B by a geographical move of a user will be described. Therefore, the wireless base station A corresponds to "other communication control device" recited in the claims and the wireless base station B corresponds to "communication control device" recited in the claims. However, the present invention is not limited to this, and the wireless base station A may correspond to "communication control device" recited in the claims and the wireless base station B may correspond to "other communication control device" recited in the claims. In other words, a wireless base station that holds a cell used by the mobile communication terminal before the movement corresponds to "other communication control device", and a wireless base station that holds a cell used by the mobile communication terminal after the movement corresponds to "communication control device".

In such a configuration, a main characteristic is that the wireless base station B, which is a communication control device according to the first embodiment, can prevent network congestion and reduce a processing load of the management device that performs data transmission/reception control between the wireless base stations.

The main characteristic will be specifically described by using the above example. When the mobile communication terminal performing wireless communication via the cell B of the wireless base station A moves into the environment using the cell C of the wireless base station B by a geographical move of a user, wireless communication is established between the cell C and the mobile communication terminal. The wireless base station B requests the EPC to switch wire route after a predetermined time elapses from when the wireless communication is established between the cell C and the mobile communication terminal, and the EPC that receives the request switches a wire route from the EPC to the wireless base station A to a wire route from the EPC to the wireless base station B as a transmission path of data transmitted to the mobile communication terminal.

In other words, the wireless base station B does not transmit a switching request of the wire route to the EPC until a predetermined time elapses from when the wireless communication is established between the cell C and the mobile communication terminal, so that the wireless base station B waits until the wireless communication established between the cell C and the mobile communication terminal becomes stable. As a result, even if the mobile communication terminal moves frequently between the cell B and the cell C, the wireless base station B does not transmit a useless switching request of the wire route to the EPC until the communication between the cell C and the mobile communication terminal becomes stable, so that it is possible to prevent network congestion and reduce a processing load of the EPC that performs data transmission/reception control between the wireless base stations.

### Configuration of Communication Control Device (Wireless Base Station)

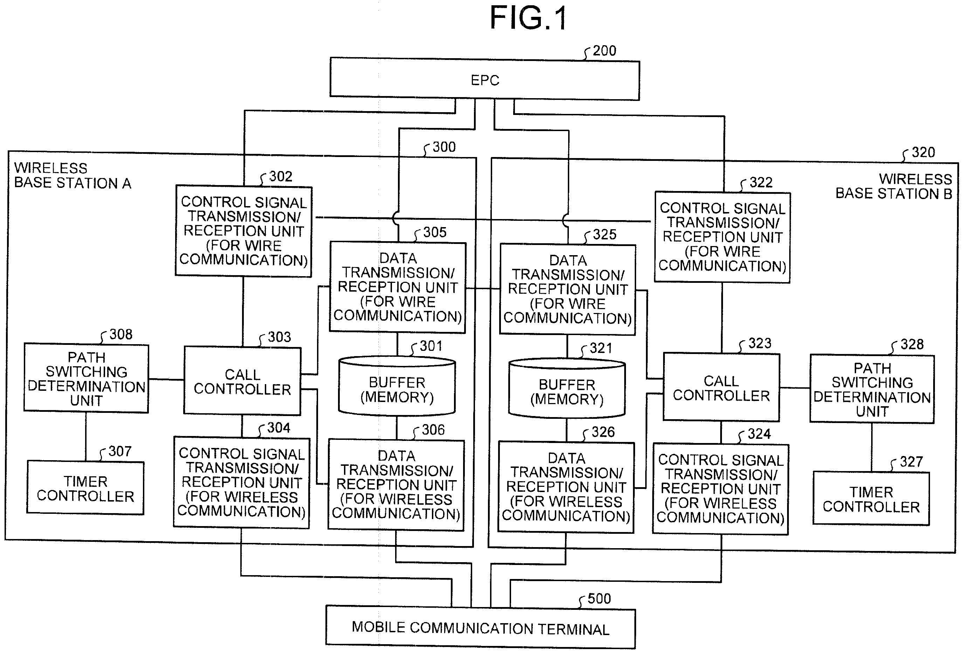

Next, a configuration of the communication control system according to the first embodiment will be described with reference to FIG. 1. FIG. 1 is a block diagram illustrating the configuration of the communication control system according the first embodiment.

An EPC 200 illustrated in FIG. 1 has the same configuration as that of the management device that performs data transmission/reception control between the wireless base stations used in the communication control system for the mobile communication terminal illustrated in this embodiment, and a mobile communication terminal 500 has the same configuration as that of a generally and widely used personal computer, a workstation, a home-use game machine, an Internet TV, a PDA, or a mobile communication terminal such as a mobile phone and a PHS, so that the detailed descriptions thereof are omitted. The wireless base station A 300 and a wireless base station B 320 have the same configuration, so that only the wireless base station B 320 will be described in detail.

As illustrated in FIG. 1, the wireless base station B 320 includes a buffer memory 321, a control signal transmission/reception unit (for wire communication) 322, a call controller 323, a control signal transmission/reception unit (for wireless communication) 324, a data transmission/reception unit (for wire communication) 325, a data transmission/reception unit (for wireless communication) 326, a timer controller 327, and a path switching determination unit 328.

The buffer memory 321 is a storage buffer for storing reception/transmission data from/to the EPC 200, the wireless base station A 300, and the mobile communication terminal 500. When specifically describing the buffer memory 321 by using the above example, the buffer memory 321 stores data transmitted from the EPC 200 to the mobile communication terminal 500 by the data transmission/reception unit (for wire communication) 325 connected to the buffer memory 321, and stores data transmitted to the mobile communication terminal 500 by the data transmission/reception unit (for wireless communication) 326 connected to the buffer memory 321.

The control signal transmission/reception unit (for wire communication) 322 transmits and receives a control signal to and from the EPC 200. When specifically describing the control signal transmission/reception unit (for wire communication) 322 by using the above example, the control signal transmission/reception unit (for wire communication) 322 receives a control signal (for example, a wire path switching completion signal, or the like) transmitted from the EPC 200, and outputs the control signal to the call controller 323. The control signal transmission/reception unit (for wire communication) 322 transmits the control signal to the EPC 200 and the wireless base station A 300 by an instruction from the call controller 323.

When the call controller 323 receives a handover request requesting for switching wireless path from the mobile communication terminal 500 that performs wireless communication using a wireless path through the wireless base station A 300, the call controller 323 switches the wireless path to a wireless path through the wireless base station B 320. When specifically describing the handover request by using the above example, the handover request transmitted from the mobile communication terminal 500 is received by a control signal transmission/reception unit (for wireless communication) 304 of the wireless base station A 300, and transmitted from a control signal transmission/reception unit (for wire communication) 302 to the wireless base station B 320. The handover request is received by the control signal transmission/reception unit (for wire communication) 322 of the wireless base station B 320 and notified to the call controller 323. Then, the call controller 323 transmits a handover response for switching the wireless path to the mobile communication terminal 500 via the control signal transmission/reception unit (for wire communication) 322 of the wireless base station B 320, the control signal transmission/reception unit (for wire communication) 302 of the wireless base station A 300, and the control signal transmission/reception unit (for wireless communication) 304. By doing this, switching of the wireless path is performed in the mobile communication terminal 500.

Further, when the call controller 323 receives a request for switching the wire path through the wireless base station A 300 performing data transmission/reception control for the mobile communication terminal 500 to the wire path through the wireless base station B 320 from the path switching determination unit 328, the call controller 323 transmits the request to the EPC 200. The call controller 323 analyzes a control signal between the call controller 323 and the EPC 200, and a control signal between the call controller 323 and the wireless base station A 300, and in accordance with the control signals, the call controller 323 transmits and receives a control signal to and from the mobile communication terminal 500 via the control signal transmission/reception unit (for wireless communication) 324 described below, and transmits and receives data in the buffer memory 321 via the data transmission/reception unit (for wire communication) 325.

The call controller 323 monitors a connection condition of the wireless path, detects a handover, and analyzes a control signal between the call controller 323 and the mobile communication terminal 500, and in accordance with the control signal, the call controller 323 transmits and receives a control signal to and from the EPC 200 via the control signal transmission/reception unit (for wire communication) 322, and transmits and receives data in the buffer memory 321 via the data transmission/reception unit (for wireless communication) 326 described below. When the switching of the wireless route during a handover is completed, the call controller 323 notifies the path switching determination unit 328 of a path switching determination request.

Further, the call controller 323 receives a path switching request from the path switching determination unit 328 described below, and transmits a control signal of the path switching request to the EPC 200 via the control signal transmission/reception unit (for wire communication) 322. When the call controller 323 receives a control signal indicating a failure of the path switching from the EPC 200, the call controller 323 notifies the path switching determination unit 328 of the failure of the path switching.

The control signal transmission/reception unit (for wireless communication) 324 transmits and receives a control signal to and from the mobile communication terminal 500. When specifically describing the control signal transmission/reception unit (for wireless communication) 324 by using the above example, the control signal transmission/reception unit (for wireless communication) 324 receives a control signal transmitted from the mobile communication terminal 500 and outputs the control signal to the call controller 323, and outputs a control signal received from the EPC 200 to the mobile communication terminal 500 by an instruction from the call controller 323.

The data transmission/reception unit (for wire communication) 325 transmits and receives data to and from the EPC 200 and the wireless base station A 300. When specifically describing the data transmission/reception unit (for wire communication) 325 by using the above example, the data transmission/reception unit (for wire communication) 325 receives various data transmitted from the mobile communication terminal 500 and stores the data into the buffer memory 321, and obtains various data from the buffer memory 321 and transmits the data to the mobile communication terminal 500 by an instruction from the call controller 323. The data transmission/reception unit (for wire communication) 325 receives data from the wireless base station A 300 and stores the data into the buffer memory 321, and obtains data stored in the buffer memory 321 and transmits the data to the wireless base station A 300 by an instruction from the call controller 323.

The data transmission/reception unit (for wireless communication) 326 transmits and receives data to and from the mobile communication terminal 500. When specifically describing the data transmission/reception unit (for wireless communication) 326 by using the above example, the data transmission/reception unit (for wireless communication) 326 receives various data transmitted from the EPC 200 and stores the data into the buffer memory 321, and obtains various data from the buffer memory 321 and transmits the data to the EPC 200 by an instruction from the call controller 323.

The timer controller 327 starts a timer and notifies timer completion. When specifically describing the timer controller 327 by using the above example, the timer controller 327 receives a timer setting from the path switching determination unit 328 described below and starts the timer. Thereafter, when the timer times out, the timer controller 327 sends a timeout notification to the path switching determination unit 328.

After a predetermined time elapses from when the wireless path is switched by the call controller 323, the path switching determination unit 328 transmits a request for switching the wire path through the wireless base station A 300 performing data transmission/reception control for the mobile communication terminal 500 to the wire path through the wireless base station B 320 to the EPC 200 via the call controller 323. When specifically describing the path switching determination unit 328 by using the above example, if the path switching determination unit 328 receives a notice indicating that the wireless path is switched from the call controller 323, the path switching determination unit 328 instructs the timer controller 327 to start the timer. Thereafter, when the path switching determination unit 328 receives a timer completion notice from the timer controller 327, the path switching determination unit 328 sends a request for switching the wire path to the wire path through the wireless base station B 320 to the call controller 323. Then, the call controller 323 transmits the request for switching the wire path to the wire path through the wireless base station B 320 to the EPC 200, and thus the wire path is switched by the EPC 200.

### Processing by Communication Control System

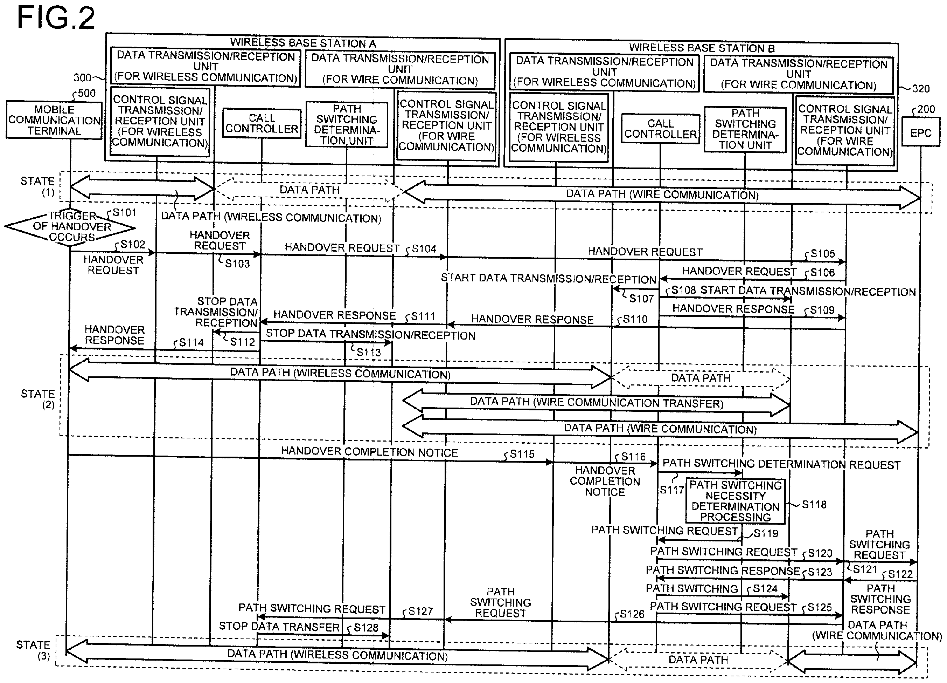

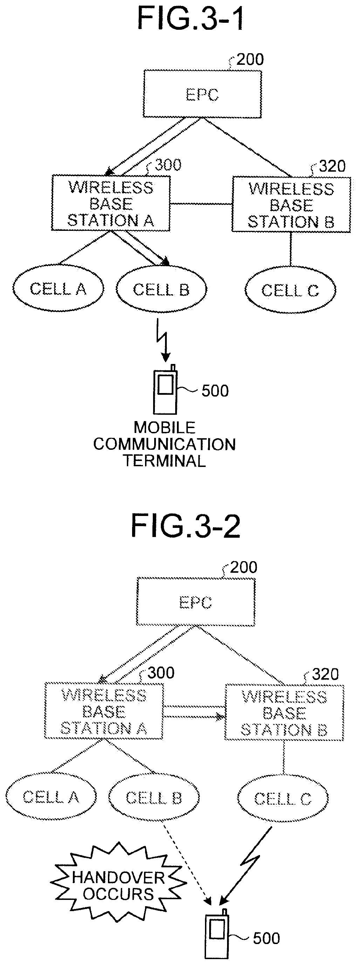

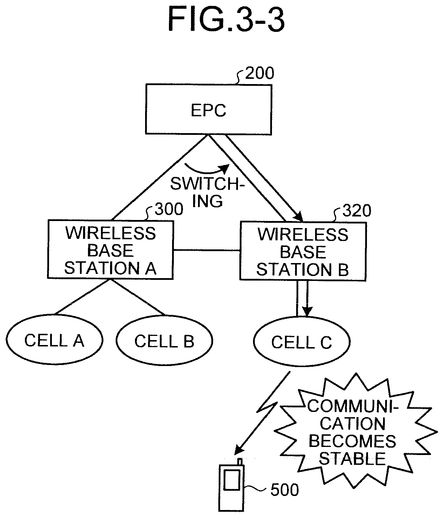

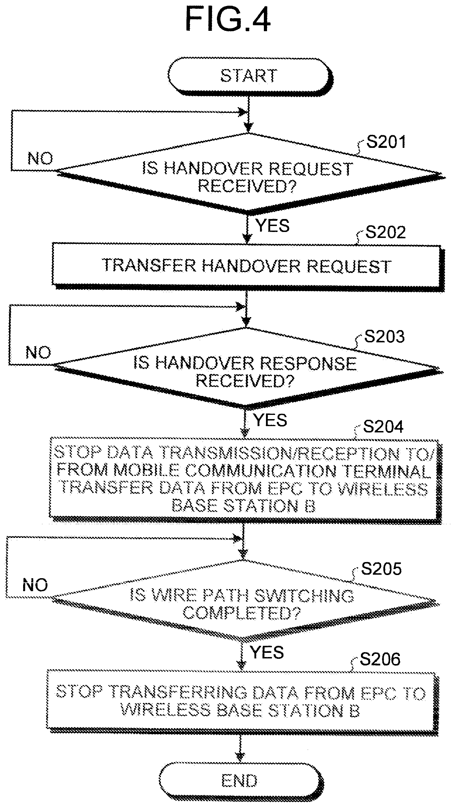

Next, processing by the communication control system according to the first embodiment will be described with reference to FIGS. 2 to 6. Here, first, a processing sequence of the communication control system according to the first embodiment will be described with reference to FIGS. 2 and 3, and next, processing flows of each device will be described with reference to FIGS. 4 to 6.

### Processing Sequence of Communication Control System

First, the processing sequence of the communication control system according to the first embodiment will be described with reference to FIGS. 2 to 3. FIG. 2 is a sequence diagram illustrating a processing flow of the communication control system according the first embodiment, FIG. 3-1 is a diagram illustrating a first state in the sequence, FIG. 3-2 is a diagram illustrating a second state in the sequence, and FIG. 3-3 is a diagram illustrating a third state in the sequence.

As illustrated in FIG. 3-1, the communication control system includes the mobile communication terminal 500 that performs wireless communication via the cell B of the wireless base station A 300, the wireless base station A 300 that includes the cell A and the cell B and controls wireless communication, the wireless base station B 320 that includes the cell C and controls wireless communication, and the EPC 200 that performs path control and data transmission/reception control between the wireless base station A 300 and the wireless base station B 320 by wire communication (the first state).

In such a configuration, when the mobile communication terminal 500 moves into an environment using the cell C of the wireless base station B 320 by a geographical move of a user, a trigger of handover occurs (step S101), and the mobile communication terminal 500 transmits a handover request to the wireless base station A 300 (step S102).

The control signal transmission/reception unit (for wireless communication) 304 of the wireless base station A 300 that receives the handover request transmits the handover request to the wireless base station B 320 via a call controller 303 and the control signal transmission/reception unit (for wire communication) 302 (step S103 to step S105).

The control signal transmission/reception unit (for wire communication) 322 of the wireless base station B 320 that receives the handover request from the wireless base station A 300 outputs the handover request to the call controller 323 (step S106). Then, the call controller 323 instructs the data transmission/reception unit (for wireless communication) 326 and the data transmission/reception unit (for wire communication) 325 to start data transmission/reception (step S107 and step S108). Thereafter, the call controller 323 transmits a handover response as a response indicating that the handover is allowed to the wireless base station A 300 via the control signal transmission/reception unit (for wire communication) 322 (step S109 and step S110).

Next, the control signal transmission/reception unit (for wire communication) 302 of the wireless base station A 300 that receives the handover response from the wireless base station B 320 outputs the handover response to the call controller 303 (step S111). Then, the call controller 303 instructs a data transmission/reception unit (for wireless communication) 306 to stop data transmission/reception (step S112) and also instructs a data transmission/reception unit (for wire communication) 305 to transfer received data to the wireless base station B 320 (step S113). Thereafter, the call controller 303 transmits the handover response to the mobile communication terminal 500 via the control signal transmission/reception unit (for wireless communication) 304 (step S114).

In this way, in the communication control system, as illustrated in FIG. 3-2, a path from the EPC 200 to the wireless base station A 300 to the wireless base station B 320 is established as a wire path, and a path from the cell C of the wireless base station B 320 to the mobile communication terminal 500 is being established as a wireless path. At this time, although a path is actually established between the cell C of the wireless base station B 320 and the mobile communication terminal 500, the wireless base station B 320 controls so that data and control signals are not transmitted to the mobile communication terminal 500.

Returning to FIG. 2, the mobile communication terminal 500 that receives the handover response from the wireless base station B 320 via the wireless base station A 300 establishes a data path to the wireless base station B 320, and transmits a handover completion notice indicating that the path is switched to the wireless base station B 320 by using the established path (step S115).

The data transmission/reception unit (for wireless communication) 326 of the wireless base station B 320 that receives the handover completion notice outputs the completion notice to the call controller 323 (step S116), and the call controller 323 transmits a path switching determination request to the path switching determination unit 328 (step S117).

The path switching determination unit 328 that receives the path switching determination request transmits a timer start instruction to the timer controller 327 not illustrated in FIG. 2, and performs path switching necessity determination processing (step S118). Here, when the path switching determination unit 328 receives a timer completion notice from the timer controller 327, the path switching determination unit 328 determines that the path can be switched (determines that the wireless communication with the mobile communication terminal 500 becomes stable). Then, the path switching determination unit 328 that determines that the path can be switched outputs a path switching request to the call controller 323 (step S119). Next, the call controller 323 transmits the path switching request to the EPC 200 via the control signal transmission/reception unit (for wire communication) 322 (step S120 and step S121).

The EPC 200 that receives the path switching request establishes a data path to the wireless base station B 320, and when the data path is established, the EPC 200 transmits a path switching response indicating that the path is switched to the wireless base station B 320 (step S122).

The call controller 323 of the wireless base station B 320 that receives the path switching request from the EPC 200 via the control signal transmission/reception unit (for wire communication) 322 instructs the data transmission/reception unit (for wire communication) 325 to switch the wire path, and the data transmission/reception unit (for wire communication) 325 connects a path to the EPC 200 (step S123 and step S124). Next, the call controller 323 transmits the path switching request to the wireless base station A 300 via the control signal transmission/reception unit (for wire communication) 322 (step S125 and step S126).

The call controller 303 of the wireless base station A 300 that receives the path switching request from the wireless base station B 320 via the control signal transmission/reception unit (for wire communication) 302 instructs the data transmission/reception unit (for wire communication) 305 to end the data transfer, and the data transmission/reception unit (for wire communication) 305 ends the data transfer to the wireless base station B 320 (step S127 and step S128).

In this way, in the communication control system, as illustrated in FIG. 3-3, a path from the EPC 200 to the wireless base station B 320 is established as a wire path, and a path from the wireless base station B 320 to the cell C to the mobile communication terminal 500 is established as a wireless path. Here, the wireless base station B 320 transmits data and control signals to the mobile communication terminal 500 via the cell C.

### Processing Flow in Wireless Base Station A 300

Next, a processing flow of the wireless base station A in the communication control system according to the first embodiment will be described with reference to FIG. 4. FIG. 4 is a flowchart illustrating the processing flow in the wireless base station A according the first embodiment.

As illustrated in FIG. 4, when the wireless base station A 300 receives a handover request from the mobile communication terminal 500 (step S201: Yes), the wireless base station A 300 transfers the handover request to the wireless base station B 320 (step S202).

Thereafter, when the wireless base station A 300 receives the handover response from the wireless base station B 320 (step S203: Yes), the wireless base station A 300 stops data transmission/reception to/from the mobile communication terminal 500, and transfers data transmitted from the EPC 200 to the mobile communication terminal to the wireless base station B 320 (step S204).

When the wireless base station A 300 receives the path switching request indicating that the wire path switching is completed from the wireless base station B 320 (step S205: Yes), the wireless base station A 300 stops transferring the data transmitted from the EPC 200 to the mobile communication terminal to the wireless base station B 320 (step S206).

### Processing Flow in Wireless Base Station B 320

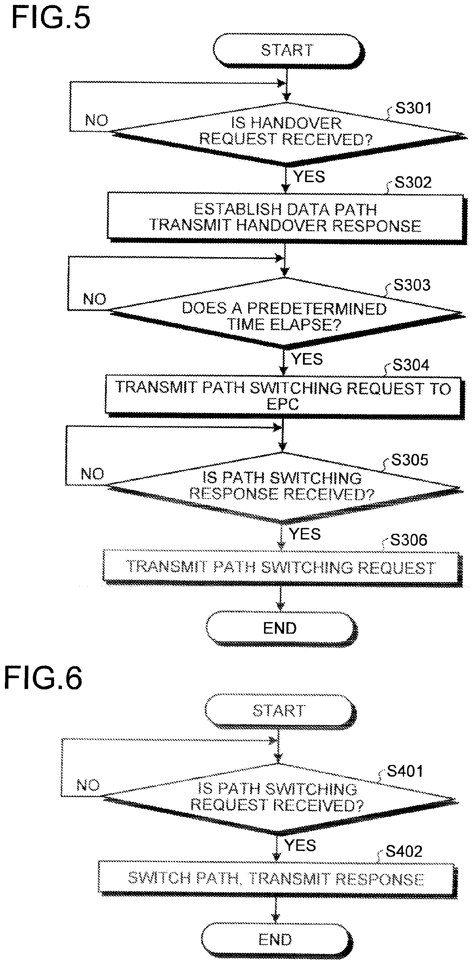

Next, a processing flow of the wireless base station B in the communication control system according to the first embodiment will be described with reference to FIG. 5. FIG. 5 is a flowchart illustrating the processing flow in the wireless base station B according the first embodiment.

As illustrated in FIG. 5, when the wireless base station B 320 receives a handover request from the mobile communication terminal 500 via the wireless base station A 300 (step S301: Yes), the wireless base station B 320 establishes a path through which the wireless base station B 320 performs wireless communication with the mobile communication terminal 500 via the cell C, and transmits a handover response indicating that the path is established to the mobile communication terminal 500 via the wireless base station A 300 (step S302).

When a predetermined time elapses from when the handover response indicating that the wireless path is connected is received from the mobile communication terminal 500 via the wireless base station A 300 (step S303: Yes), the wireless base station B 320 transmits a path switching request (wire path switching request) to the EPC 200 (step S304).

When the wireless base station B 320 receives the path switching response indicating that the path (wire path) is switched from the EPC 200 (step S305: Yes), the wireless base station B 320 transmits a path switching request indicating stopping of data transfer to the wireless base station A 300 (step S306). Thereafter, the wireless base station B 320 transmits and receives data to and from the mobile communication terminal 500 via the wireless path, and transmits and receives data to and from the EPC 200 via the wire path, so that both the wireless path and the wire path are switched.

### Processing Flow in EPC 200

Next, a processing flow of the EPC in the communication control system according to the first embodiment will be described with reference to FIG. 6. FIG. 6 is a flowchart illustrating the processing flow in the EPC according the first embodiment.

As illustrated in FIG. 6, when the EPC 200 receives a path switching request for switching the path (wire path) from the wireless base station B 320 (step S401: Yes), the EPC 200 establishes a data path to the wireless base station B 320, and transmits a path switching response indicating that the path is switched to the wireless base station B 320 (step S402).

Specifically, even when the mobile communication terminal 500 moves from an area managed by the wireless base station A 300 to an area managed by the wireless base station B 320 and a wireless path is established between the wireless base station B 320 and the mobile communication terminal 500, the EPC 200 transmits data transmitted to the mobile communication terminal 500 to the wireless base station A 300 until the EPC 200 receives a path switching request for switching the path (wire path) from the wireless base station B 320. When the wireless path (wireless connection) between the wireless base station B 320 and the mobile communication terminal 500 becomes stable, and the EPC 200 receives the path switching request from the wireless base station B 320, the EPC 200 transmits the data transmitted to the mobile communication terminal 500 to the wireless base station B 320 that manages the mobile communication terminal 500.

### Effect of First Embodiment

As described above, according to the first embodiment, when the wireless base station B 320 receives a handover request requesting for switching a wireless path from the mobile communication terminal 500 that performs wireless communication using the wireless path through the wireless base station A 300, the wireless base station B 320 switches the wireless path to a wireless path through the wireless base station B 320, and after a predetermined time elapses from when the wireless path is switched, the wireless base station B 320 transmits a request for switching a wire path through the wireless base station A 300 that performs data transmission/reception control for the mobile communication terminal 500 to a wire path through the wireless base station B 320 to the EPC 200, so that it is possible to prevent network congestion and reduce a processing load of the EPC 200 that performs data transmission/reception control between the wireless base stations.

Specifically, the wireless base station B 320 does not transmit a switching request of the wire route to the EPC 200 until a predetermined time elapses from when the wireless communication is established between the cell C and the mobile communication terminal 500, so that the wireless base station B 320 waits until the wireless communication established between the cell C and the mobile communication terminal 500 becomes stable. As a result, even if the mobile communication terminal 500 moves frequently between the cell B and the cell C, the wireless base station B 320 does not transmit a useless switching request of the wire route to the EPC 200 until the communication between the cell C and the mobile communication terminal 500 becomes stable, so that it is possible to prevent network congestion and reduce a processing load of the EPC 200 that performs data transmission/reception control between the wireless base stations.

### Second Embodiment

Although, in the first embodiment, a case is described in which the switching request of the wire route is transmitted to the EPC 200 after a predetermined time elapses from when the wireless communication is established between the cell C and the mobile communication terminal 500, the present invention is not limited to this, and, congestion state of the network managed by the EPC 200 may be determined after a predetermined time elapses from when the wireless communication is established between the cell C and the mobile communication terminal 500, and the switching request of the wire route may be transmitted to the EPC 200 only when it is determined that no congestion occurs.

In other words, in the first embodiment, the wireless base station B 320 transmit the switching request of the wire route to the EPC 200 after a predetermined time elapses from when the wireless communication is established as a guarantee that the wireless communication between the cell C and the mobile communication terminal 500 becomes stable. However, as a guarantee that the wireless communication between the cell C and the mobile communication terminal 500 becomes stable, it is possible to use the condition that a predetermined time elapses from when the wireless communication is established and the congestion state of the network.

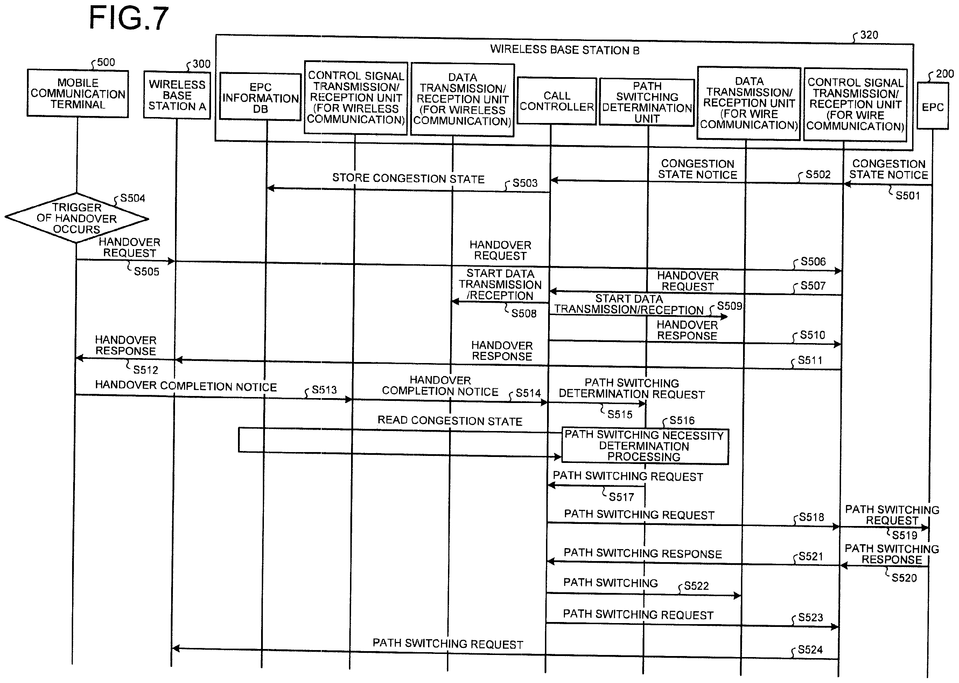

Therefore, in the second embodiment, with reference to FIG. 7, an example will be described in which the wireless base station B 320 further determines the congestion state of the network managed by the EPC 200 after a predetermined time elapses from when the wireless communication is established between the cell C and the mobile communication terminal 500, and the wireless base station B 320 transmits the switching request of the wire route to the EPC 200 only when it is determined that no congestion occurs. FIG. 7 is a sequence diagram illustrating a processing flow in a communication control system according the second embodiment.

As illustrated in FIG. 7, the control signal transmission/reception unit (for wire communication) 322 of the wireless base station B 320 receives network congestion information from the EPC 200 on a periodic basis (for example, once an hour) (step S501). The control signal transmission/reception unit (for wire communication) 322 transmits the received network congestion information to the call controller 323 (step S502), and the call controller 323 stores the received network congestion information in an EPC information DB 329 (step S503).

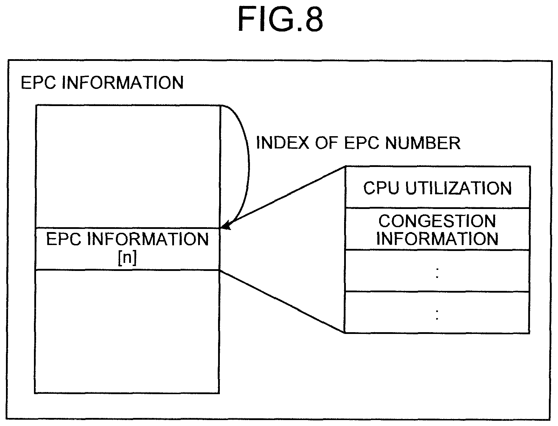

Here, the network congestion information will be specifically described. As illustrated in FIG. 8, the call controller 323 stores the network congestion information including ["CPU utilization" indicating the utilization rate of the CPU in the EPC 200 and "congestion information" indicating the congestion state of the EPC 200] received from the EPC 200 into the EPC information DB 329 as EPC information. The EPC information DB 329 stores the EPC information for each of a plurality of EPCs not illustrated in FIG. 7 with an EPC number as an index associated with each of the plurality of EPCs. Here, the EPC information DB 329 stores the EPC information in an area corresponding to the EPC 200. FIG. 8 is a diagram illustrating an example of information stored in the EPC information DB.

The subsequent processing from step S504 to step S515 in which the handover request is transmitted from the mobile communication terminal 500 to the wireless base station B 320, the wireless path is switched, the mobile communication terminal 500 transmits the handover completion notice to the wireless base station B 320, and the call controller 323 of the wireless base station B 320 transmits the path switching determination request to the path switching determination unit 328 is the same as the processing from step S101 to step S117 described in the first embodiment, and thus the detailed description will not be repeated here.

The path switching determination unit 328 that receives the path switching determination request from the call controller 323 of the wireless base station B 320 transmits a timer start instruction to the timer controller 327 not illustrated in FIG. 7, and performs path switching necessity determination processing (step S516). Here, when the path switching determination unit 328 receives a timer completion notice from the timer controller 327, the path switching determination unit 328 reads the EPC information stored in the EPC information DB 329, and only when the path switching determination unit 328 determines that no congestion occurs from the congestion information of the EPC information, the path switching determination unit 328 determines that the path can be switched (determines that the wireless communication with the mobile communication terminal 500 becomes stable). Then, the path switching determination unit 328 that determines that the path can be switched outputs a path switching request to the call controller 323 (step S517).

The subsequent processing from step S518 to step S524 in which the path switching request is transmitted from the wireless base station B 320 to the EPC 200, the path (wire path) is switched by the EPC 200, and the path switching request to stop data transfer is transmitted from the wireless base station B 320 to the wireless base station A 300 is the same as the processing from step S120 to step S128 described in the first embodiment, and thus the detailed description will not be repeated here.

In this way, according to the second embodiment, when the wireless base station B 320 determines that no congestion occurs in the wire path controlled by the EPC 200 on the basis of the held congestion state after a predetermined time elapses from when the wireless path is switched, the wireless base station B 320 transmits a request for switching the wire path to the wire path through the wireless base station B 320 to the EPC 200, and thus it is possible to perform path switching in accordance with congestion state of the upper level node. As a result, it is possible to prevent congestion at upper level node due to path switching caused by handovers.

### Third Embodiment

Although, in the first embodiment, a case is described in which the switching request of the wire route is transmitted to the EPC 200 after a predetermined time elapses from when the wireless communication is established between the cell C and the mobile communication terminal 500, the present invention is not limited to this, and, it is possible to obtain a handover history from the handover request transmitted from the mobile communication terminal 500, further determine the obtained handover history after a predetermined time elapses from when the wireless communication is established between the cell C and the mobile communication terminal 500, and transmit the switching request of the wire route to the EPC 200.

In other words, as a guarantee that the wireless communication between the cell C and the mobile communication terminal 500 becomes stable, it is possible to use the condition that a predetermined time elapses from when the wireless communication is established and the handover history of the mobile communication terminal 500.

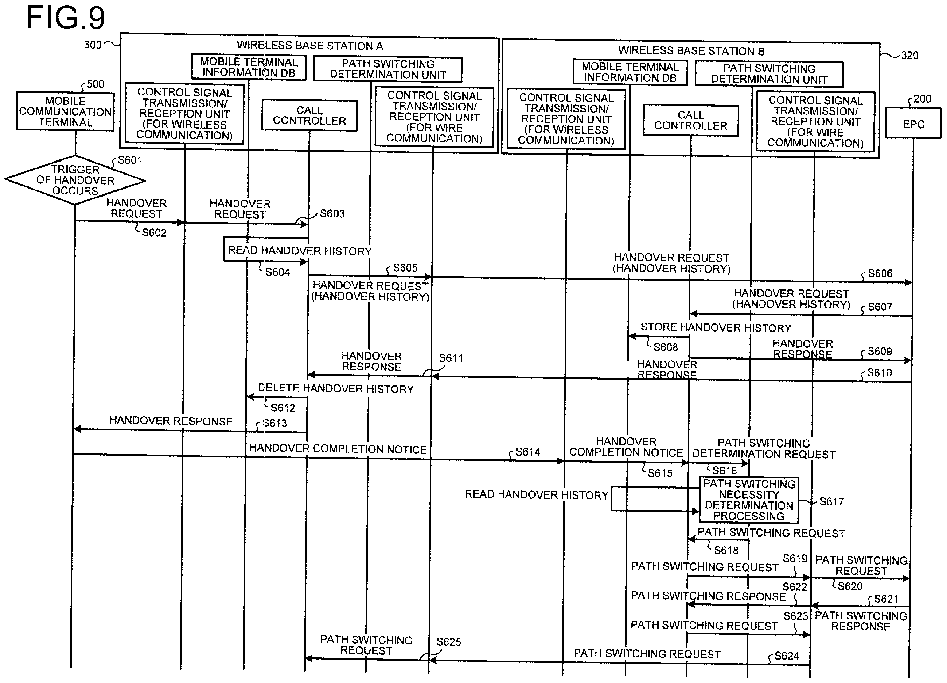

Therefore, in the third embodiment, with reference to FIG. 9, an example will be described in which the wireless base station B 320 obtains the handover history from the handover request transmitted from the mobile communication terminal 500, further determines the obtained handover history after a predetermined time elapses from when the wireless communication is established between the cell C and the mobile communication terminal 500, and transmits the switching request of the wire route to the EPC 200. FIG. 9 is a sequence diagram illustrating a processing flow in a communication control system according the third embodiment. Different from the first embodiment, in the third embodiment, an operation for determining the obtained handover history and transmitting the switching request of the wire route to the EPC 200 will be intensively described, and thus the description of the same processing as that in the first embodiment will not be repeated here.

As illustrated in FIG. 9, when the mobile communication terminal 500 moves into an environment using the cell C of the wireless base station B 320 by a geographical move of a user, a trigger of handover occurs (step S601), and the mobile communication terminal 500 transmits a handover request including a handover history of the mobile communication terminal 500 to the wireless base station A 300 (step S602).

The control signal transmission/reception unit (for wireless communication) 304 of the wireless base station A 300 that receives the handover request transmits the handover request to the call controller 303 (step S603). Then, the call controller 303 obtains the handover history included in the handover request, stores the handover history in a mobile terminal information DB 310, reads the handover history from the mobile terminal information DB 310 (step S604), and transmits the handover request to the EPC 200 via the control signal transmission/reception unit (for wire communication) 302 (step S605 and step S606).

The EPC 200 that receives the handover request from the wireless base station A 300 outputs the handover request to the wireless base station B 320 (step S607). Then the call controller 323 of the wireless base station B 320 obtains the handover history included in the handover request, and stores the handover history in the mobile terminal information DB 330 (step S608). Further, the call controller 323 transmits a handover response as a response indicating that the handover is allowed to the EPC 300, and the EPC 200 transmits the handover response to the wireless base station A 300 (step S609 and step S610).

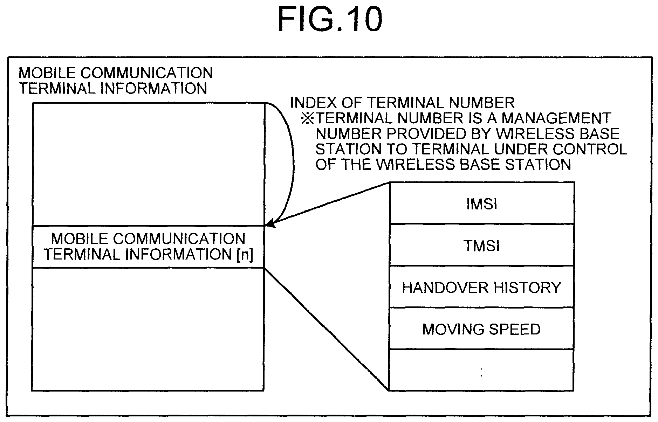

Here, the handover history will be specifically described. As illustrated in FIG. 10, the call controller 323 stores the handover history including ["IMSI" indicating International Mobile Subscriber Identity that is compliant with ITU-T Recommendation E.212 and different from telephone number, "TMSI" indicating Temporary Mobile Subscriber Identity that is temporarily assigned and different from telephone number, "handover history" indicating a time when the handover is performed, a handover destination cell number, and a handover source cell number, and "moving speed" indicating a moving speed notified from the terminal when the handover is performed] received from the mobile communication terminal 500 into the mobile terminal information DB 330. The buffer memory 321 stores a handover history for each of a plurality of mobile communication terminals with a terminal number associated with each of a plurality of mobile communication terminals not illustrated in FIG. 9 as an index. Here, the buffer memory 321 stores the handover history in an area corresponding to the mobile communication terminal 500. In a buffer memory 301 of the wireless base station A 300, the same information is stored in the same format. FIG. 10 is a diagram illustrating an example of the information stored in the mobile terminal information DB 330.

Next, the control signal transmission/reception unit (for wire communication) 302 of the wireless base station A 300 that receives the handover response from the wireless base station B 320 outputs the handover response to the call controller 303 (step S611). Then, the call controller 303 deletes the stored handover history (step S612). Next, the call controller 303 instructs the data transmission/reception unit (for wireless communication) 306 to stop data transmission/reception, instructs the data transmission/reception unit (for wire communication) 305 to transfer received data to the wireless base station B 320, and then transmits the handover response to the mobile communication terminal 500 via the control signal transmission/reception unit (for wireless communication) 304 (step S613).

Thereafter, the mobile communication terminal 500 that receives the handover response from the wireless base station B 320 via the wireless base station A 300 establishes a data path to the wireless base station B 320, and transmits a handover completion notice indicating that the path is switched to the wireless base station B 320 by using the established path (step S614).

The control signal transmission/reception unit (for wireless communication) 324 of the wireless base station B 320 that receives the handover completion notice outputs the completion notice to the call controller 323 (step S615), and the call controller 323 transmits a path switching determination request to the path switching determination unit 328 (step S616).

The path switching determination unit 328 that receives the path switching determination request transmits a timer start instruction to the timer controller 327 not illustrated in FIG. 9, and performs path switching necessity determination processing (step S617). Here, when the path switching determination unit 328 receives a timer completion notice from the timer controller 327, the path switching determination unit 328 reads the handover history stored in the buffer memory 321, and only when the path switching determination unit 328 determines that the wireless communication of the mobile communication terminal 500 is stable from the handover history, the path switching determination unit 328 determines that the path can be switched (determines that the wireless communication with the mobile communication terminal 500 becomes stable). Then, the path switching determination unit 328 that determines that the path can be switched outputs a path switching request to the call controller 323 (step S618).

A determination criterion based on the handover history may be arbitrarily specified such as, for example, the number of handovers per minute is three or less.

The subsequent processing of step S619 and the following steps in which the path switching request is transmitted from the wireless base station B 320 to the EPC 200, the path (wire path) is switched by the EPC 200, and the path switching request to stop data transfer is transmitted from the wireless base station B 320 to the wireless base station A 300 is the same as the processing from step S120 to step S128 described in the first embodiment, and thus the detailed description will not be repeated here.

As described above, according to the third embodiment, when the wireless base station B 320 receives a handover request requesting for switching a wireless path from the mobile communication terminal 500 that performs wireless communication using the wireless path through the wireless base station A 300, the wireless base station B 320 switches the wireless path to a wireless path through the wireless base station B 320, obtains the handover history included in the handover request, and stores the handover history into the mobile terminal information DB 330, and when the wireless base station B 320 determines that the communication of the mobile communication terminal 500 is stable on the basis of the handover history stored in the mobile terminal information DB 330 after a predetermined time elapses from when the wireless path is switched, the wireless base station B 320 transmits a request for switching the wire path to a wire path through the wireless base station B 320 to the EPC 200, so that it is possible to determine that handovers occur continuously because, for example, the terminal is located at a boundary of the cells by using the handover history, and path switching can be performed while the handover occurrence state is correctly understood.

### Fourth Embodiment

Although, in the third embodiment, a case is described in which the switching request of the wire route is transmitted to the EPC 200 on the basis of the handover history included in the handover request after a predetermined time elapses from when the wireless communication is established between the cell C and the mobile communication terminal 500, the present invention is not limited to this, and, it is possible to transmit the switching request of the wire route to the EPC 200 on the basis of the moving speed included in the handover request.

In other words, as a guarantee that the wireless communication between the cell C and the mobile communication terminal 500 becomes stable, it is possible to use the condition that a predetermined time elapses from when the wireless communication is established and the moving speed of the mobile communication terminal 500.

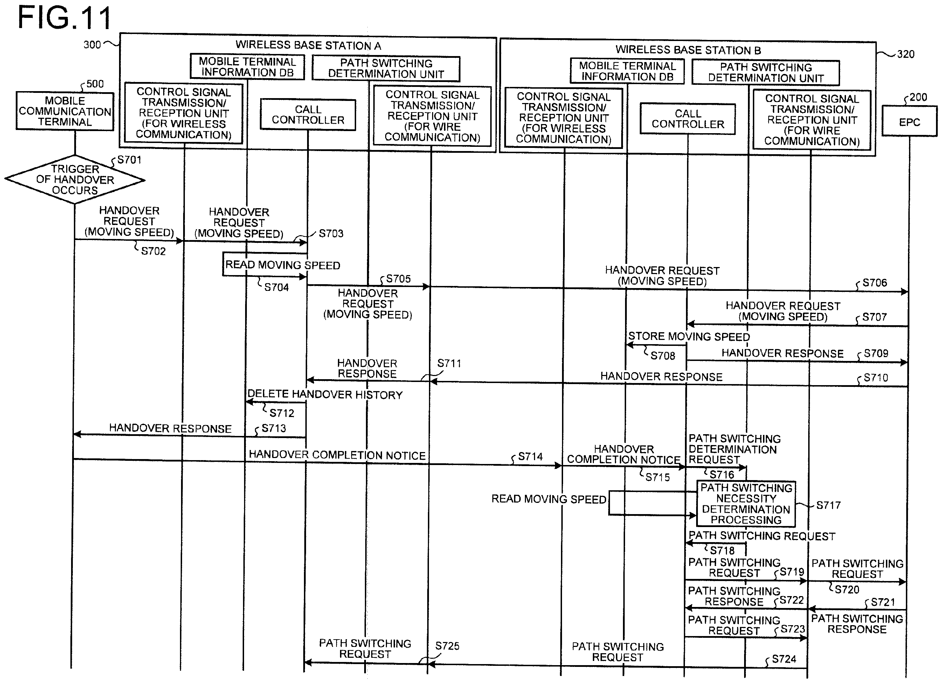

Therefore, in the fourth embodiment, with reference to FIG. 11, an example will be described in which the wireless base station B 320 obtains the moving speed from the hand over request transmitted from the mobile communication terminal 500, further determines the obtained moving speed after a predetermined time elapses from when the wireless communication is established between the cell C and the mobile communication terminal 500, and transmits the switching request of the wire route to the EPC 200. FIG. 11 is a sequence diagram illustrating a processing flow in a communication control system according the fourth embodiment. Different from the first embodiment, in the fourth embodiment, an operation for determining the obtained moving speed and transmitting the switching request of the wire route to the EPC 200 will be intensively described, and thus the description of the same processing as that in the first embodiment and the third embodiment will not be repeated here.

As illustrated in FIG. 11, when the mobile communication terminal 500 moves into an environment using the cell C of the wireless base station B 320 by a geographical move of a user, a trigger of handover occurs (step S701), and the mobile communication terminal 500 transmits a handover request including a handover history (moving speed) of the mobile communication terminal 500 to the wireless base station A 300 (step S702).

The control signal transmission/reception unit (for wireless communication) 304 of the wireless base station A 300 that receives the handover request transmits the handover request to the call controller 303, and the call controller 303 obtains the handover history (moving speed) included in the handover request, and stores the handover history (moving speed) in the mobile terminal information DB 310 (step S703).

Next, the call controller 303 obtains the stored moving speed (step S704), and transmits the handover request including the obtained moving speed to the EPC 200 via the control signal transmission/reception unit (for wire communication) 302 (step S705 and step S706).

The EPC 200 that receives the handover request from the wireless base station A 300 outputs the handover request to the wireless base station B 320 (step S707). Then the call controller 323 of the wireless base station B 320 obtains the handover history (moving speed) included in the handover request, and stores the handover history (moving speed) in the mobile terminal information DB 330 (step S708). Further, the call controller 323 transmits a handover response as a response indicating that the handover is allowed to the EPC 200, and the EPC 200 transmits the handover response to the wireless base station A 300 (step S709 and step S710).

Next, the control signal transmission/reception unit (for wire communication) 302 of the wireless base station A 300 that receives the handover response from the wireless base station B 320 outputs the handover response to the call controller 303 (step S711). Then, the call controller 303 deletes the stored handover history (step S712). Next, the call controller 303 instructs the data transmission/reception unit (for wireless communication) 306 to stop data transmission/reception, instructs the data transmission/reception unit (for wire communication) 305 to transmit received data to the wireless base station B 320, and then transmits the handover response to the mobile communication terminal 500 via the control signal transmission/reception unit (for wireless communication) 304 (step S713).

Thereafter, the mobile communication terminal 500 that receives the handover response from the wireless base station B 320 via the wireless base station A 300 establishes a data path to the wireless base station B 320, and transmits a handover completion notice indicating that the path is switched to the wireless base station B 320 by using the established path (step S714).

The control signal transmission/reception unit (for wireless communication) 324 of the wireless base station B 320 that receives the handover completion notice outputs the completion notice to the call controller 323 (step S715), and the call controller 323 transmits a path switching determination request to the path switching determination unit 328 (step S716).

The path switching determination unit 328 that receives the path switching determination request transmits a timer start instruction to the timer controller 327 not illustrated in FIG. 11, and performs path switching necessity determination processing (step S717). Here, when the path switching determination unit 328 receives a timer completion notice from the timer controller 327, the path switching determination unit 328 reads the moving speed (refer to FIG. 10) of the handover history stored in the mobile terminal information DB 330, and only when the path switching determination unit 328 determines that the moving speed of the mobile communication terminal 500 is stable from the moving speed, the path switching determination unit 328 determines that the path can be switched (determines that the wireless communication with the mobile communication terminal 500 becomes stable). Then, the path switching determination unit 328 that determines that the path can be switched outputs a path switching request to the call controller 323 (step S718).

A determination criterion based on the moving speed may be arbitrarily specified and used such as, for example, it is determined that the path can be switched when the moving speed is 30 Km/h or less.

The subsequent processing of step S719 and the following steps in which the path switching request is transmitted from the wireless base station B 320 to the EPC 200, the path (wire path) is switched by the EPC 200, and the path switching request to stop data transfer is transmitted from the wireless base station B 320 to the wireless base station A 300 is the same as the processing from step S120 to step S128 described in the first embodiment, and thus the detailed description will not be repeated here.

As described above, according to the fourth embodiment, when the wireless base station B 320 receives a handover request requesting for switching a wireless path from the mobile communication terminal 500 that performs wireless communication using the wireless path through the wireless base station A 300, the wireless base station B 320 switches the wireless path to a wireless path through the wireless base station B 320, obtains speed information included in the handover request, and stores the speed information into the buffer memory 321, and if the speed information stored in the buffer memory 321 indicates a predetermined speed or less after a predetermined time elapses from when the wireless path is switched, the wireless base station B 320 transmits a request for switching the wire path to a wire path through the wireless base station B 320 to the EPC 200, so that it is possible to perform path switching based on the moving speed of the mobile communication terminal 500, and when the mobile communication terminal 500 moves at high speed, it is possible to predict that handovers to a different cell may occur continuously, and thus path switching can be performed while the handover occurrence state is correctly understood.

### Fifth Embodiment

In the present invention, even when the wireless base station B 320 transmits a path switching request to the EPC 200, but the path switching is failed in the EPC 200, the path switching can be retried by restarting the timer.

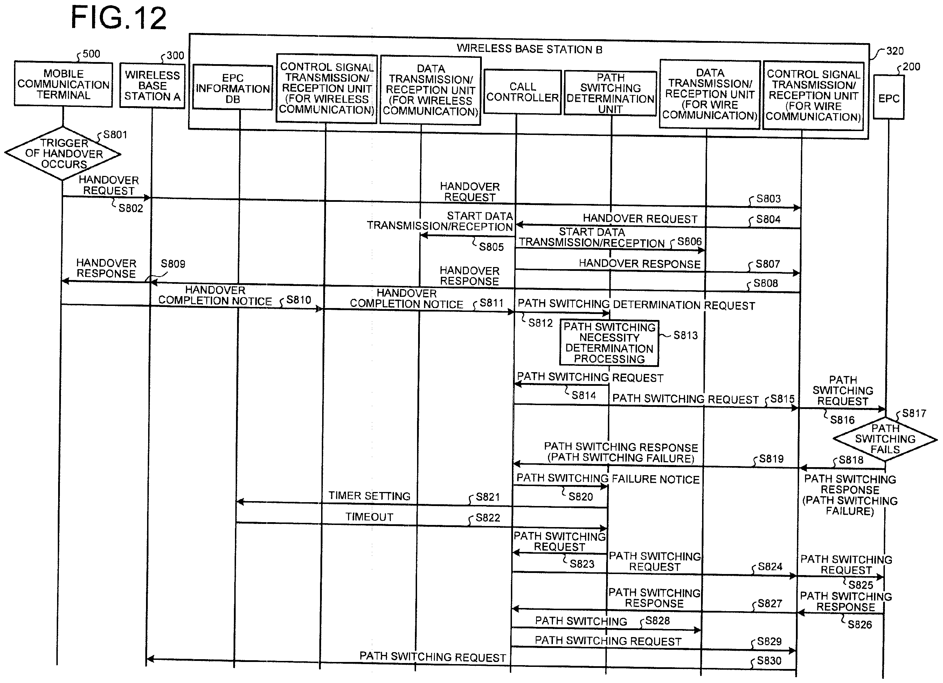

Therefore, in the fifth embodiment, with reference to FIG. 12, a case will be described in which, even when the wireless base station B 320 transmits a path switching request to the EPC 200, but the path switching is failed in the EPC 200, the path switching is retried by restarting the timer. FIG. 12 is a sequence diagram illustrating a processing flow in a communication control system according the fifth embodiment. In the fifth embodiment, the case in which, even when the wireless base station B 320 transmits a path switching request to the EPC 200, but the path switching is failed in the EPC 200, the path switching is retried by restarting the timer will be intensively described, and thus the description of the same processing as that in the first to the fourth embodiments will not be repeated here.

As illustrated in FIG. 12, the processing from step S801 to step S816 in which the handover request is transmitted from the mobile communication terminal 500, the path switching determination of the wire path is performed in the wireless base station B 320, and the path switching request of the wire path is transmitted to the EPC 200 is the same as the processing from step S101 to step S121 described in the first embodiment, and thus the detailed description will not be repeated here.

Thereafter, if the switching of the wire path fails due to network congestion or a network failure (step S817), the EPC 200 that receives the path switching request transmits a path switching failure response to the wireless base station B 320 (step S818).

The control signal transmission/reception unit (for wire communication) 322 of the wireless base station B 320 that receives the path switching failure response transmits the path switching failure response to the path switching determination unit 328 via the call controller 323 (step S819 and step S820). By receiving the path switching failure response, the path switching determination unit 328 instructs the timer controller 327 to start the timer again (step S821).

Then, the path switching determination unit 328 that receives a timer completion (timeout) notice from the timer controller 327 outputs a path switching request to the call controller 323 (step S822 and step S823), and the call controller 323 transmits the path switching request to the EPC 200 via the control signal transmission/reception unit (for wire communication) 322 (step S824 and step S825).

The processing of step S826 in which the path switching is performed is the same as the processing from step S122 to step S128 described in the first embodiment, and thus the detailed description will not be repeated here.

As described above, according to the fifth embodiment, the wireless base station B 320 transmits a request for switching the wire path to a wire path through the wireless base station B 320 to the EPC 200, and when the wireless base station B 320 receives the switching failure response indicating that the wire path switching fails from the EPC 200, the wireless base station B 320 communicates with the mobile communication terminal 500 by using the wire path not having been switched, and thus it is possible to continue communication in the handover destination cell by using the path established before the path switching operation.

Also, according to the fifth embodiment, the wireless base station B 320 transmits a request for switching the wire path to a wire path through the wireless base station B 320 to the EPC 200, and when the wireless base station B 320 receives the switching failure response indicating that the wire path switching fails from the EPC 200, the wireless base station B 320 communicates with the mobile communication terminal 500 by using the wire path not having been switched, and further the wireless base station B 320 transmits the request for switching the wire path to the wire path through the wireless base station B 320 to the EPC 200 after a predetermined time elapses, so that it is possible to continue communication in the handover destination cell by using the path established before the path switching operation. Further, the path switching can be performed after a certain period while the communication in the handover destination is continued.

### Sixth Embodiment

Although the embodiments of the present invention have been described, the present invention can be implemented in various different forms other than the embodiments described above. Therefore, as illustrated below, the different embodiments will be described in the following sections: (1) Device connection configuration, (2) Action when wire path switching fails, (3) System configuration or the like, (4) Program.

### (1) Device connection configuration

Although, in the first to the fifth embodiments described above, the communication control system including the EPC 200, the wireless base station A 300, the wireless base station B 320, and the mobile communication terminal 500 is described, the present invention is not limited to this, and a plurality of mobile communication terminals may be connected, a plurality of wireless base stations may be connected, and a plurality of other EPCs that control connections of other wireless base stations may be connected in the communication control system. The number of cells held by each of the wireless base station A 300 and the wireless base station B 320 is not limited, and the wireless base station A 300 and the wireless base station B 320 may hold a plurality of cells respectively.

### (2) Action when wire path switching fails

Although, in the fifth embodiment, an example is described in which the wireless base station B 320 retries switching when the wire path switching fails in the EPC 200, the present invention is not limited to this, and various methods can be performed when the wire path switching fails. For example, when the wire path switching fails, the wireless base station B 320 may communicate with the mobile communication terminal 500 by using the previously established wire path between the EPC 200 and the wireless base station A 300 without performing a retry. By doing so, even when the wire path switching is not performed successfully, the communication can be performed without interruption.

### (3) System configuration or the like

In the processing described in the embodiments, all or part of the processing described to be automatically performed (for example, path switching processing, timer processing, and the like) can be performed manually. Moreover, the processing procedures, control procedures, specific names, and information including various data and parameters (for example, FIGS. 8 and 10, and the like) described in the above description and the drawings can be arbitrarily changed unless otherwise stated.

The constituent elements of the devices illustrated in the drawings are functionally conceptual, and need not necessarily be physically configured as illustrated. In other words, specific forms of distribution and integration of the devices are not limited to those illustrated in the drawings, and all or part of the devices can be functionally or physically distributed or integrated in arbitrary units (for example, integrating together the call controller and the path switching determination unit) according to various loads and the state of use. Moreover, all or an arbitrary part of the processing functions performed in each device can be realized by a CPU and a program analyzed and executed by the CPU, or can be realized as hardware by wired logic.

### (4) Program

The various processing described in the above embodiments can be realized by executing a program prepared in advance by a computer system such as a personal computer or a workstation. Therefore, in the description below, a computer system that executes a program having the same functions as those of the above embodiments will be described as another embodiment.

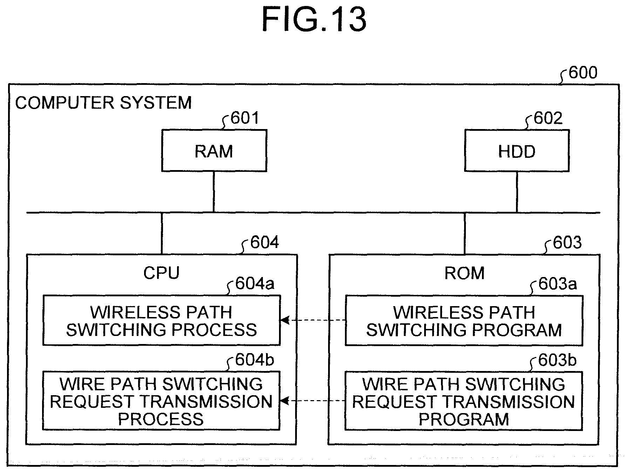

FIG. 13 is a diagram illustrating an example of a computer system that executes a communication control program. As illustrated in FIG. 13, a computer system 600 includes a RAM 601, an HDD 602, a ROM 603, and a CPU 604. Here, as illustrated in FIG. 13, in the ROM 603, programs realizing the same functions as those of the above embodiments, that is, a wireless path switching program 603a and a wire path switching request transmission program 603b are prepared in advance.

By reading and executing the programs 603a and 603b, the CPU 604 realizes a wireless path switching process 604a and a wire path switching request transmission process 604b as illustrated in FIG. 13. The wireless path switching process 604a corresponds to the call controller 323 illustrated in FIG. 1, and in the same manner, the wire path switching request transmission process 604b corresponds to the call controller 323 and the path switching determination unit 328.

The HDD602 stores the control signals received from the mobile communication terminal 500 and the EPC 200, and further stores the handover history received from the mobile communication terminal 500 and the network congestion information (EPC information) received from the EPC 200.

The above programs 603a and 603b need not necessarily be stored in the ROM 603. For example, the programs may be stored in a "portable physical medium" such as a flexible disk (FD), a CD-ROM, an MO disk, a DVD disk, a magneto-optical disk, and an IC card which are inserted into the computer system 600, or in a "fixed physical medium" such as a hard disk drive (HDD) provided inside or outside of the computer system 600, or further in "another computer system" connected to the computer system 600 via a public line, the Internet, LAN, WAN, or the like, and the computer system 600 may read the programs from the above medium or the computer system and execute the programs.

## Claims

1. A communication control device (320) adapted to control wireless communication of a mobile communication terminal (500) in a wireless communication control system, the wireless communication control system including the communication control device and a management device (200) that performs path control and data transmission/reception control between the communication control device and another communication control device (300) by wire communication, the communication control device comprising:
a wireless path switching unit that, when receiving a handover request requesting for switching wireless path from a mobile communication terminal (500) that performs wireless communication using a first wireless path through the other communication control device (300), is adapted to switch the first wireless path to a second wireless path through the communication control device (320); and
a wire path switching request transmission unit that is adapted to transmit, to the management device (200), a request for switching a first wire path through the another communication control device (300) performing data transmission/reception control for the mobile communication terminal (500) to a second wire path through the communication control device (320) when determining that no congestion occurs in the second wire path after a predetermined time elapses from when the first wireless path is switched to the second wireless path, and
is adapted to not transmit the request for switching the first wire path to the second wire path when determining that congestion occurs in the second wire path after the predetermined time elapses from when the wireless path is switched to the second wireless path.

2. The communication control device (320) according to claim 1, wherein, when the wire path switching request transmission unit transmits the request for switching the first wire path to the second wire path and receives a switching failure response indicating that the wire path switching fails from the management device (200), the wire path switching request transmission unit is adapted to communicate with the mobile communication terminal (500) by using the first wire path that has not been switched.

3. The communication control device (320) according to claim 1, wherein,
when the wire path switching request transmission unit transmits the request for switching the first wire path to the second wire path and receives a switching failure response indicating that the wire path switching fails from the management device (200), the wire path switching request transmission unit is adapted to communicate with the mobile communication terminal (500) by using the first wire path that has not been switched and to further transmit the request for switching the first wire path to the second wire path to the management device (200) after a predetermined time elapses.

4. A communication control method suitable for a communication control device (320) that controls wireless communication of a mobile communication terminal (500) in a wireless communication control system, the wireless communication control system including the communication control device (320) and a management device (200) that performs path control and data transmission/reception control between the communication control device (320) and another communication control device (300) by wire communication, the communication control method comprising:
a wireless path switching step of, when receiving a handover request requesting for switching wireless path from a mobile communication terminal that performs wireless communication using a first wireless path through the other communication control device, switching the first wireless path to a second wireless path through the communication control device; and
a wire path switching request transmission step of, to the management device,
transmitting a request for switching a first wire path through the another communication control device performing data transmission/reception control for the mobile communication terminal to a second wire path through the communication control device when determining that no congestion occurs in the second wire path after a predetermined time elapses from when the first wireless path is switched to the second wireless path, and
not transmitting the request for switching the first wire path to the second wire path when determining that congestion occurs in the second wire path after the predetermined time elapses from when the wireless path is switched to the second wireless path.

5. The communication control method according to claim 4, wherein
the wire path switching request transmission step includes, when transmitting the request for switching the first wire path to the second wire path and receiving a switching failure response indicating that the wire path switching fails from the management device, communicating with the mobile communication terminal by using the first wire path that has not been switched.

6. The communication control method according to claim 4, wherein
the wire path switching request transmission step includes, when transmitting the request for switching the first wire path to the second wire path and receiving a switching failure response indicating that the wire path switching fails from the management device, communicating with the mobile communication terminal by using the first wire path that has not been switched, and further transmitting the request for switching the first wire path to the second wire path to the management device after a predetermined time elapses.

7. A wireless communication system including a communication control device (320) according to any of claims 1 to 3.

## Patentansprüche

1. Kommunikationssteuervorrichtung (320), geeignet zum Steuern einer drahtlosen Kommunikation eines mobilen Kommunikationsendgeräts (500) in einem drahtlosen Kommunikationssteuersystem, wobei das drahtlose Kommunikationssteuersystem die Kommunikationssteuervorrichtung und eine Verwaltungsvorrichtung (200), die eine Wegsteuerung und eine Datensende-/Datenempfangssteuerung zwischen der Kommunikationssteuervorrichtung und einer anderen Kommunikationssteuervorrichtung (300) durch drahtgebundene Kommunikation ausführt, umfasst, wobei die Kommunikationssteuervorrichtung Folgendes umfasst:
eine drahtlose Wegschalteinheit, die geeignet ist, wenn sie eine Übergabeanfrage empfängt, die das Schalten eines drahtlosen Wegs von einem mobilen Kommunikationsendgerät (500), das eine drahtlose Kommunikation unter Verwendung eines ersten drahtlosen Wegs über die andere Kommunikationssteuervorrichtung (300) ausführt, anfragt, um den ersten drahtlosen Weg auf einen zweiten drahtlosen Weg über die Kommunikationssteuervorrichtung (320) zu schalten; und
eine Einheit zum Senden einer Anfrage zum Schalten eines drahtgebundenen Wegs, die geeignet ist, um an die Verwaltungsvorrichtung (200) eine Anfrage zu senden, um einen ersten drahtgebundenen Weg über die andere Kommunikationssteuervorrichtung (300), welche die Datensende-/Datenempfangssteuerung für das mobile Kommunikationsendgerät (500) ausführt, auf einen zweiten drahtgebundenen Weg über die Kommunikationssteuervorrichtung (320) zu schalten, wenn bestimmt wird, dass es auf dem zweiten drahtgebundenen Weg nicht zu einer Überlastung kommt, nachdem eine vorbestimmte Zeit seit dem Zeitpunkt, an dem der erste drahtlose Weg auf den zweiten drahtlosen Weg geschaltet wurde, verstrichen ist, und die geeignet ist, um die Anfrage zum Schalten des ersten drahtgebundenen Wegs auf den zweiten drahtgebundenen Weg nicht zu senden, wenn bestimmt wird, dass es zu einer Überlastung auf dem zweiten drahtgebundenen Weg kommt, nachdem die vorbestimmte Zeit, seit dem Zeitpunkt, an dem der drahtlose Weg auf den zweiten drahtlosen Weg geschaltet wurde, verstrichen ist.

2. Kommunikationssteuervorrichtung (320) nach Anspruch 1, wobei, wenn die Einheit zum Senden einer Anfrage zum Schalten eines drahtgebundenen Wegs die Anfrage zum Schalten des ersten drahtgebundenen Wegs auf den zweiten drahtgebundenen Weg sendet und von der Verwaltungsvorrichtung (200) eine Schaltfehlerantwort empfängt, die angibt, dass das Schalten des drahtgebundenen Wegs fehlgeschlagen ist, die Einheit zum Senden einer Anfrage zum Schalten eines drahtgebundenen Wegs geeignet ist, um mit dem mobilen Kommunikationsendgerät (500) unter Verwendung des ersten drahtgebundenen Wegs zu kommunizieren, der nicht geschaltet wurde.

3. Kommunikationssteuervorrichtung (320) nach Anspruch 1, wobei, wenn die Einheit zum Senden einer Anfrage zum Schalten eines drahtgebundenen Wegs die Anfrage zum Schalten des ersten drahtgebundenen Wegs auf den zweiten drahtgebundenen Weg sendet und von der Verwaltungsvorrichtung (200) eine Schaltfehlerantwort empfängt, die angibt, dass das Schalten des drahtgebundenen Wegs fehlgeschlagen ist, die Einheit zum Senden einer Anfrage zum Schalten eines drahtgebundenen Wegs geeignet ist, um mit dem mobilen Kommunikationsendgerät (500) unter Verwendung des ersten drahtgebundenen Wegs zu kommunizieren, der nicht geschaltet wurde, und um ferner die Anfrage zum Schalten des ersten drahtgebundenen Wegs auf den zweiten drahtgebundenen Weg an die Verwaltungsvorrichtung (200) zu senden, nachdem eine vorbestimmte Zeit verstrichen ist.

4. Kommunikationssteuerverfahren, geeignet für eine Kommunikationssteuervorrichtung (320), die eine drahtlose Kommunikation eines mobilen Kommunikationsendgeräts (500) in einem drahtlosen Kommunikationssteuersystem steuert, wobei das drahtlose Kommunikationssteuersystem die Kommunikationssteuervorrichtung (320) und eine Verwaltungsvorrichtung (200), die eine Wegsteuerung und eine Datensende-/ Datenempfangssteuerung zwischen der Kommunikationssteuervorrichtung (320) und einer anderen Kommunikationssteuervorrichtung (300) durch drahtgebundene Kommunikation ausführt, umfasst, wobei das Kommunikationssteuerverfahren Folgendes umfasst:
einen Schritt des Schaltens eines drahtlosen Wegs, um beim Empfangen einer Übergabeanfrage, die das Schalten des drahtlosen Wegs von einem mobilen Kommunikationsendgerät, das eine drahtlose Kommunikation unter Verwendung eines ersten drahtlosen Wegs über die andere Kommunikationssteuervorrichtung ausführt, anfragt, den ersten drahtlosen Weg auf einen zweiten drahtlosen Weg über die Kommunikationssteuervorrichtung zu schalten; und
einen Schritt zum Senden einer Anfrage zum Schalten eines drahtgebundenen Wegs, um an die Verwaltungsvorrichtung eine Anfrage zu senden zum Schalten eines ersten drahtgebundenen Wegs über die andere Kommunikationssteuervorrichtung, die eine Datensende-/ Datenempfangssteuerung für das mobile Kommunikationsendgerät ausführt, auf einen zweiten drahtgebundenen Weg über die Kommunikationssteuervorrichtung, zu senden, wenn bestimmt wird, dass es auf dem zweiten drahtgebundenen Weg nicht zu einer Überlastung kommt, nachdem eine vorbestimmte Zeit seit dem Zeitpunkt, an dem der erste drahtlose Weg auf den zweiten drahtlosen Weg geschaltet wurde, verstrichen ist, und um die Anfrage zum Schalten des ersten drahtgebundenen Wegs auf den zweiten drahtgebundenen Weg nicht zu senden, wenn bestimmt wird, dass es auf dem zweiten drahtgebundenen Weg zu einer Überlastung kommt, nachdem die vorbestimmte Zeit, seit dem Zeitpunkt, an dem der drahtlose Weg auf den zweiten drahtlosen Weg geschaltet wurde, verstrichen ist.

5. Kommunikationssteuerverfahren nach Anspruch 4, wobei der Schritt des Sendens einer Anfrage zum Schalten eines drahtgebundenen Wegs, wenn die Anfrage zum Schalten des ersten drahtgebundenen Wegs auf den zweiten drahtgebundenen Weg gesendet wird und von der Verwaltungsvorrichtung eine Schaltfehlerantwort empfangen wird, die angibt, dass das Schalten des drahtgebundenen Wegs fehlgeschlagen ist, das Kommunizieren mit dem mobilen Kommunikationsendgerät unter Verwendung des ersten drahtgebundenen Wegs, der nicht geschaltet wurde, umfasst.

6. Kommunikationssteuerverfahren nach Anspruch 4, wobei der Schritt des Sendens einer Anfrage zum Schalten eines drahtgebundenen Wegs, wenn die Anfrage zum Schalten des ersten drahtgebundenen Wegs auf den zweiten drahtgebundenen Weg gesendet wird und von der Verwaltungsvorrichtung eine Schaltfehlerantwort empfangen wird, die angibt, dass das Schalten des drahtgebundenen Wegs fehlgeschlagen ist, das Kommunizieren mit dem mobilen Kommunikationsendgerät unter Verwendung des ersten drahtgebundenen Wegs, der nicht geschaltet wurde, und ferner das Senden der Anfrage zum Schalten des ersten drahtgebundenen Wegs auf den zweiten drahtgebundenen Weg an die Verwaltungsvorrichtung, nachdem eine vorbestimmte Zeit verstrichen ist, umfasst.

7. Drahtloses Kommunikationssystem, umfassend eine Kommunikationssteuervorrichtung (320) nach einem der Ansprüche 1 bis 3.

## Revendications

1. Dispositif de commande de communication (320) apte à commander une communication sans fil d'un terminal de communication mobile (500) dans un système de commande de communication sans fil, le système de commande de communication sans fil incluant le dispositif de commande de communication et un dispositif de gestion (200) qui met en oeuvre une commande de chemin et une commande de transmission / réception de données entre le dispositif de commande de communication et un autre dispositif de commande de communication (300) par le biais d'une communication filaire, le dispositif de commande de communication comprenant :
une unité de commutation de chemin sans fil qui, lors de la réception d'une demande de transfert intercellulaire demandant une commutation de chemin sans fil d'un terminal de communication mobile (500) qui met en oeuvre une communication sans fil en utilisant un premier chemin sans fil à travers l'autre dispositif de commande de communication (300), est apte à commuter le premier chemin sans fil vers un second chemin sans fil par le biais du dispositif de commande de communication (320) ; et
une unité de transmission de demande de commutation de chemin filaire apte à transmettre, au dispositif de gestion (200), une demande de commutation d'un premier chemin filaire à travers ledit un autre dispositif de commande de communication (300) mettant en oeuvre une commande de transmission / réception de données pour le terminal de communication mobile (500), vers un second chemin flaire à travers le dispositif de commande de communication (320), lorsqu'il est déterminé qu'aucun encombrement ne se produit dans le second chemin filaire après l'écoulement d'un temps prédéterminé depuis le moment où le premier chemin sans fil est commuté vers le second chemin sans fil ; et est apte à ne pas transmettre la demande de commutation du premier chemin filaire vers le second chemin filaire lorsqu il est déterminé qu'un encombrement se produit dans le second chemin filaire après l'écoulement du temps prédéterminé depuis le moment où le chemin sans fil est commuté vers le second chemin sans fil.

2. Dispositif de commande de communication (320) selon la revendication 1, dans lequel,
lorsque l'unité de transmission de demande de commutation de chemin filaire transmet la demande de commutation du premier chemin filaire vers le second chemin filaire et reçoit une réponse d'échec de commutation indiquant l'échec de la commutation de chemin filaire à partir du dispositif de gestion (200), l'unité de transmission de demande de commutation de chemin filaire est apte à communiquer avec le terminal de communication mobile (500) en utilisant le premier chemin filaire qui n'a pas été commuté.

3. Dispositif de commande de communication (320) selon la revendication 1, dans lequel,
lorsque l'unité de transmission de demande de commutation de chemin filaire transmet la demande de commutation du premier chemin filaire vers le second chemin filaire, et reçoit une réponse d'échec de commutation indiquant l'échec de la commutation de chemin filaire à partir du dispositif de gestion (200), l'unité de transmission de demande de commutation de chemin filaire est apte à communiquer avec le terminal de communication mobile (500) en utilisant le premier chemin filaire qui n'a pas été commuté, et à transmettre en outre la demande de commutation du premier chemin flaire vers le second chemin filaire au dispositif de gestion (200) après l'écoulement d'un temps prédéterminé.

4. Procédé de commande de communication pertinent pour un dispositif de commande de communication (320) qui commande une communication sans fil d'un terminal de communication mobile (500) dans un système de commande de communication sans fil, le système de commande de communication sans fil incluant le dispositif de commande de communication (320) et un dispositif de gestion (200) qui met en oeuvre une commande de chemin et une commande de transmission / réception de données entre le dispositif de commande de communication (320) et un autre dispositif de commande de communication (300) par le biais d'une communication filaire, le procédé de commande de communication comprenant :
une étape de commutation de chemin sans fil consistant à, lors de la réception d'une demande de transfert intercellulaire demandant une commutation de chemin sans fil d'un terminal de communication mobile qui met en oeuvre une communication sans fil en utilisant un premier chemin sans fil à travers l'autre dispositif de commande de communication, commuter le premier chemin sans fil vers un second chemin sans fil par le biais du dispositif de commande de communication ; et
une étape de transmission de demande de commutation de chemin filaire consistant à, au dispositif de gestion,
transmettre une demande de commutation d'un premier chemin filaire à travers ledit un autre dispositif de commande de communication mettant en oeuvre une commande de transmission / réception de données pour le terminal de communication mobile, vers un second chemin filaire, à travers le dispositif de commande de communication, lorsqu'il est déterminé qu'aucun encombrement ne se produit dans le second chemin filaire après l'écoulement d'un temps prédéterminé depuis le moment ou le premier chemin sans fil est commuté vers le second chemin sans fil ; et
ne pas transmettre la demande de commutation du premier chemin filaire vers le second chemin filaire lorsqu'il est déterminé qu'un encombrement se produit dans le second chemin filaire après l'écoulement du temps prédéterminé depuis le moment où le chemin sans fil est commuté vers le second chemin sans fil.

5. Procédé de commande de communication selon la revendication 4, dans lequel
l'étape de transmission de demande de commutation de chemin filaire inclut, lors de la transmission de la demande de commutation du premier chemin filaire vers le second chemin filaire, et de la réception d'une réponse d'échec de commutation indiquant l'échec de la commutation de chemin filaire à partir du dispositif de gestion, l'étape consistant à communiquer avec le terminal de communication mobile en utilisant le premier chemin filaire qui n'a pas été commuté.

6. Procédé de commande de communication selon la revendication 4, dans lequel
l'étape de transmission de demande de commutation de chemin filaire inclut, lors de la transmission de la demande de commutation du premier chemin filaire vers le second chemin filaire, et de la réception d'une réponse d'échec de commutation indiquant l'échec de la commutation de chemin filaire à partir du dispositif de gestion, l'étape consistant à communiquer avec le terminal de communication mobile en utilisant le premier chemin filaire qui n'a pas été commuté et à transmettre en outre la demande de commutation du premier chemin filaire vers le second chemin filaire au dispositif de gestion, après l'écoulement d'un temps prédéterminé.

7. Système de communication sans fil incluant un dispositif de commande de communication (320) selon l'une quelconque des revendications 1 à 3.
